# EUROPÄISCHE PATENTSCHRIFT

(11) **EP 2 515 617 B1**
(45) Veröffentlichungstag und Bekanntmachung des Hinweises auf die Patenterteilung: **20.11.2013**
(21) Anmeldenummer: 12157504.7
(22) Anmeldetag: 29.02.2012
(51) Int. Cl.: H05B 35/00, H05B 37/02

(54) **Elektronisches Vorschaltgerät zum betreiben mindestens einer LED und/oder mindestens einer Entladungslampe**
Electronic pre-switching device and method for operating at least one LED and/or at least one discharge lamp
Appareil d'entrée électronique destiné au fonctionnement d'au moins une DEL et/ou au moins une lampe à décharge

(30) Priorität: 16.03.2011 DE 102011005596
(43) Veröffentlichungstag der Anmeldung: 24.10.2012
(73) Patentinhaber: OSRAM GmbH, 80807 München (DE)
(72) Erfinder: Gerber, Maximilian, 81543 München (DE); Lecheler, Reinhard, 86633 Neuburg/Donau (DE); Mayer, Siegfried, 85452 Moosinning (DE); Storm, Arwed, 85221 Dachau (DE)

(56) Entgegenhaltungen:
- EP-A1- 0 871 103
- EP-A1- 1 555 861
- EP-A2- 2 187 710
- WO-A1-2009/003509

## Beschreibung

### Technisches Gebiet

Die vorliegende Erfindung betrifft ein elektronisches Vorschaltgerät zum Betreiben mindestens einer LED und/oder mindestens einer Entladungslampe mit einem ersten Anschluss zum Koppeln mit einer Phase einer Wechselspannungsversorgung, einem zweiten Anschluss zum Koppeln mit dem Nullleiter der Wechselspannungsversorgung, einem Steuereingang zum Einkoppeln eines Steuersignals einer Steuervorrichtung, die ihrerseits mit einer Phase der Wechselspannungsversorgung gekoppelt ist, einem ersten Ausgang zum Koppeln mit der mindestens einen LED, einem zweiten Ausgang zum Koppeln mit der mindestens einen Entladungslampe, einer ersten Treiberschaltung für die mindestens eine LED, einer zweiten Treiberschaltung für die mindestens eine Entladungslampe, einer Auswertevorrichtung zum Auswerten des Steuersignals am Steuereingang, wobei die Auswertevorrichtung einen Mikrocontroller umfasst, der mit der ersten und der zweiten Treiberschaltung gekoppelt ist, um diese in Abhängigkeit des Steuersignals zu aktivieren, wobei der Mikrocontroller einen Ansteuereingang aufweist, der mit dem Steuereingang koppelbar ist.

### Stand der Technik

Bei herkömmlichen Installationen von Beleuchtungseinrichtungen in Kombination mit einem Bewegungsmelder, wie sie beispielsweise aus Treppenhäusern im Stand der Technik bekannt sind, wird bei Aktivierung des Bewegungsmelders die mit dem Bewegungsmelder gekoppelte Phase einer Wechselspannungsversorgung an das dem Bewegungsmelder nachgeschaltete elektronische Vorschaltgerät der Beleuchtungseinrichtung gekoppelt. Als Folge davon wird die Beleuchtungseinrichtung angeschaltet.

In neuerer Zeit sind elektronische Vorschaltgeräte bekannt geworden, beispielsweise das so genannte Dual-Power-EVG der Anmelderin, bei dem mittels eines Steuereingangs ein bestimmter Betriebsmodus gewählt werden kann. Bei dem als Beispiel genannten elektronischen Vorschaltgerät ist es in diesem Zusammenhang möglich, nur mindestens eine LED zu betreiben oder nur mindestens eine Entladungslampe oder beide zugleich. Bei einem derartigen elektronischen Vorschaltgerät ist der Schaltausgang des Bewegungsmelders mit dem Steuereingang des elektronischen Vorschaltgeräts gekoppelt, während das elektronische Vorschaltgerät selbst mit einer Phase der Wechselspannungsversorgung gekoppelt ist. Liegt am Steuereingang kein definiertes Signal an, so kann durch kapazitive Kopplung von anderen spannungsführenden Leitungen ein unerwünschtes Signal am Steuereingang entstehen, welches von der Auswertevorrichtung fehlinterpretiert wird. Die Gefahr kapazitiver Kopplungen besteht insbesondere deshalb, da die mit dem Steuereingang gekoppelte Steuerleitung, an deren anderem Ende der Bewegungsmelder sitzt, häufig parallel zur Wechselstromversorgungsleitung des elektronischen Vorschaltgeräts verlegt ist.

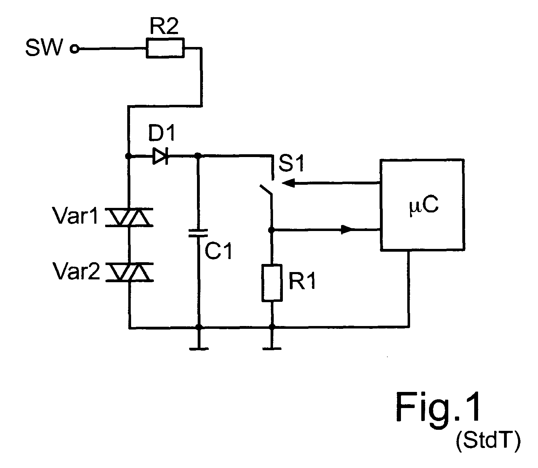

Eine aus dem Stand der Technik bekannte in diesem Zusammenhang eingesetzte Auswertevorrichtung ist schematisch in Fig. 1 dargestellt. Wird ein Schalter S1 geschlossen, so fällt an einem Shuntwiderstand R1 eine Spannung ab, die der Spannung am Steuereingang SW proportional ist. Ein Spannungsteiler wird gebildet durch die ohmschen Widerstände R1 und R2, zwischen die zum Zwecke der Gleichrichtung eine Diode D1 gekoppelt ist. Zwei Varistoren Var1 und Var2 dienen dazu, den Schalter S1 vor Überspannungen zu schützen. Der Strecke Schalter S1 und ohmscher Widerstand R1 ist der Kondensator C1 parallel geschaltet. Der Mikrocontroller µC fragt die am Shuntwiderstand R1 abfallende Spannung im Verhältnis 1 : 10 ab. Dies hat seine Ursache darin, dass bei der in Fig. 1 dargestellten Auswertevorrichtung die Eingangsimpedanz lediglich 10 kOhm beträgt und durch die Ansteuerung im Verhältnis 1 : 10 Verluste der Auswertevorrichtung minimiert werden können. Neben den Kosten für die Varistoren Var1, Var2 ist vorliegend die Auslegung des Schalters S1 problematisch. Dieser muss im Hinblick auf Surge-Pulse auf 800 V ausgelegt sein.

Eine Erhöhung der Eingangsimpedanz zur Reduktion der Verluste kommt nicht in Betracht, da dadurch die Probleme infolge kapazitiver Ladungen auf der Steuerleitung vergrößert würden. Wird nämlich die Eingangsimpedanz erhöht, so wäre die Entladung der Leitungskapazität langsamer und würde sich daher nachteilig auf die Auswertung des Steuersignals SW am Eingang des Mikrocontrollers µC auswirken. Eine Erhöhung des Tastverhältnisses zu dem Zweck, einer Erhöhung der Eingangsimpedanz entgegenzuwirken, würde wiederum in einer Vergrößerung der Zeitanteile resultieren, in denen Strom vom Steuereingang SW zum Bezugspotential fließt, wodurch die Verluste der Auswertevorrichtung wieder erhöht würden. Überdies ist nachteilig, dass die Auswertevorrichtung zwei Pins des Mikrocontrollers µC beansprucht. Es gibt Anwendungen, in denen lediglich ein einziger Pin für die Auswertevorrichtung zur Verfügung gestellt werden kann.

### Darstellung der Erfindung

Die Aufgabe der vorliegenden Erfindung besteht deshalb darin, ein gattungsgemäßes elektronisches Vorschaltgerät derart weiterzubilden, dass eine erhöhte Störfestigkeit des Steuereingangs bei gleichzeitig geringen Kosten bereitgestellt werden kann.

Diese Aufgabe wird gelöst durch ein elektronisches Vorschaltgerät mit den Merkmalen von Patentanspruch 1.

Der vorliegenden Erfindung liegt die Erkenntnis zugrunde, dass in der Phase, in der am Steuereingang eine Netzhalbwelle anliegt (derartige Zustände werden im Nachfolgenden mit "ON" bezeichnet), die Leitungskapazität kurzgeschlossen ist und deshalb ein kapazitiver Spannungsteiler, der die am Steuereingang wirkende Leitungskapazität einer mit dem Steuereingang zu verbindenden Steuerleitung umfasst sowie die erste Kapazität, nicht wirkt. Der kapazitive Spannungsteiler wirkt vielmehr nur in der Phase, in der das Signal am Steuereingang "OFF" ist, das heißt Null beträgt. Genau in der Phase, in der die Störungen infolge der Leitungskapazität auftreten, werden diese mittels des kapazitiven Spannungsteilers reduziert und reduzieren damit die Gefahr einer Fehlinterpretation des Signals am Ansteuereingang des Mikrocontrollers.

Aufgrund dieser Maßnahme lässt sich die Störfestigkeit des Steuereingangs deutlich erhöhen. Somit können längere Steuerleitungen an das elektronische Vorschaltgerät angeschlossen werden, wodurch größere Anwendungsfelder eröffnet werden. Gegenüber dem Stand der Technik ergibt sich eine deutliche Kosteneinsparung, da keine Varistoren benötigt werden. Ebenso braucht kein Schalter auf 800 V dimensioniert werden. Aufgrund dieser Einsparung ergibt sich ebenfalls ein reduzierter Platzbedarf.

Eine bevorzugte Weiterbildung der vorliegenden Erfindung trägt dem Umstand Rechnung, dass mit der Phase und dem Nullleiter, mit dem ein erfindungsgemäßes elektronisches Vorschaltgerät gekoppelt ist, in der Praxis weitere Beleuchtungsvorrichtungen und elektronische Vorschaltgeräte gekoppelt sein können, um diese beispielsweise alle über ein und denselben Bewegungsmelder ein- und auszuschalten. Wird jedoch beispielsweise zwischen die mit dem Bewegungsmelder gekoppelte Phase, die mit dem Steuereingang eines erfindungsgemäßen elektronischen Vorschaltgeräts zu koppeln ist, und den Nullleiter eine Glühlampe gekoppelt, so wirkt diese als ohmscher Widerstand. Das Signal auf dem Nullleiter wird auf diese Weise über die Glühlampe an den Steuereingang eines erfindungsgemäßen elektronischen Vorschaltgeräts übertragen und stört dort die Auswertung des Steuersignals. Um dies zu verhindern, ist gemäß dieser bevorzugten Weiterbildung vorgesehen, dass die Auswertevorrichtung weiterhin eine Ausblendvorrichtung umfasst, die zwischen den Steuereingang und den Ansteuereingang des Mikrocontrollers gekoppelt ist, wobei die Ausblendvorrichtung ausgelegt ist, das Steuersignal nur während der Zeiträume an den Ansteuereingang des Mikrocontrollers zu koppeln, während denen das Signal am zweiten Anschluss Null ist. Damit wird in den Zeiträumen, in denen auf dem Nullleiter ein Signal vorhanden ist, das zu Störungen führen könnte, das Steuersignal nicht an den Ansteuereingang des Mikrocontrollers gekoppelt. Störungen durch andere mit derselben Steuervorrichtung, insbesondere Bewegungsmelder, gekoppelte Beleuchtungsvorrichtungen können daher zuverlässig vermieden werden.

Bevorzugt umfasst eine derartige Ausblendvorrichtung einen elektronischen Schalter mit einer Steuerelektrode, einer Bezugselektrode und einer Arbeitselektrode, wobei die Steuerelektrode mit dem zweiten Anschluss gekoppelt ist, wobei die Bezugselektrode mit einem Bezugspotential, insbesondere Masse, gekoppelt ist, wobei die Arbeitselektrode mit einem Kopplungspunkt gekoppelt ist, der mit dem Ansteuereingang des Mikrocontrollers einerseits und dem Steuereingang andererseits gekoppelt ist. Durch diese Konstellation wird bei einem Signal ON auf dem Nullleiter der Kopplungspunkt auf Masse gezogen, und damit der Ansteuereingang des Mikrocontrollers. Bei einem Signal OFF auf dem Nullleiter hingegen sperrt der elektronische Schalter, so dass das Signal am Steuereingang über den Kopplungspunkt an den Ansteuereingang des Mikrocontrollers gelegt wird.

Weiterhin bevorzugt ist eine zweite Kapazität zwischen den Kopplungspunkt und das Bezugspotential gekoppelt. Diese zweite Kapazität dient der Unterdrückung von Störungen verursacht durch Störeinkopplungen infolge von Burst-Impulsen.

Weiterhin bevorzugt ist zwischen den Steuereingang und den Kopplungspunkt ein erster ohmscher Widerstand und zwischen den Ansteuereingang des Mikrocontrollers und das Bezugspotential ein zweiter ohmscher Widerstand gekoppelt. Hierdurch ergibt sich ein Spannungsteiler, der in der vorliegenden Konstellation im Gegensatz zum Stand der Technik hochohmig ausgelegt werden kann. Die Verluste durch die Auswertevorrichtung sind daher minimal. Die Eingangsimpedanz des Steuereingangs beträgt bei einem erfindungsgemäßen elektronischen Vorschaltgerät bevorzugt zwischen 700 kOhm und 2 MOhm, insbesondere 1 MOhm. Dadurch können die Verluste im Vergleich zum Stand der Technik deutlich reduziert werden. Dabei wird zwischen den Kopplungspunkt und den Ansteuereingang des Mikrocontrollers eine Diode gekoppelt, die zur Gleichrichtung dient.

Bei einer besonders bevorzugten Ausführungsform ist der Mikrocontroller derart ausgelegt, dass er den Spitzenwert des Signals an seinem Ansteuereingang auswertet. Dadurch lässt sich die Störfestigkeit weiter erhöhen. Eine Mittelwertmessung hingegen würde zu einer Reduktion des Störabstands führen.

Bevorzugt ist im Mikrocontroller ein vorgebbarer Schwellwert abgelegt, wobei der Mikrocontroller ausgelegt ist, ein Signal an seinem Ansteuereingang als "high" einzustufen, wenn der Spitzenwert des Ansteuersignals über dem vorgebbaren Schwellwert liegt, und als "low", wenn der Spitzenwert des Ansteuersignals unter dem vorgebbaren Schwellwert liegt. Im Mikrocontroller kann festgelegt sein, dass ein "high" zu einer Aktivierung der mindestens Leuchtstofflampe und ein "low" zur Aktivierung der mindestens einen LED führt.

Bevorzugt beträgt der im Mikrocontroller abgelegte vorgebbare Schwellwert bezogen auf den Spitzenwert des Signals am Steuereingang zwischen 15 und 25 % dieses Spitzenwerts, insbesondere zwischen 18 und 23 %. Bei einer in Deutschland üblichen Netzwechselspannung mit einer Amplitude von maximal 255 Einheiten beträgt demnach der Schwellwert bevorzugt etwa 55 Einheiten. Für andere Netzwechselspannungen kann der Schwellwert entsprechend angepasst werden.

Weiterhin bevorzugt umfasst das elektronische Vorschaltgerät einen Gleichrichter, dessen Eingang einen ersten und einen zweiten Eingangsanschluss aufweist, wobei der erste Eingangsanschluss mit dem zweiten Anschluss gekoppelt ist, wobei der zweite Eingangsanschluss mit der ersten oder der zweiten oder der dritten Phase einer dreiphasigen Wechselspannungsversorgung gekoppelt ist, wobei das niedrig liegende Potential am Ausgang des Gleichrichters das Bezugspotential des elektronischen Vorschaltgeräts darstellt. Infolge eines, wie oben beschrieben, geeignet gewählten Schwellwerts kann die über die Steuervorrichtung, das heißt insbesondere den Bewegungsmelder, an den Steuereingang angelegte Netzphase eine andere sein als die am Netzeingang des elektronischen Vorschaltgeräts, die dann mit dem Gleichrichter gekoppelt ist. Dadurch können bestehende Installationen nachträglich ohne großen Aufwand auf ein energieeffizientes System umgerüstet werden.

Gemäß einer besonders bevorzugten Ausführungsform stellt die Steuervorrichtung einen Bewegungsmelder dar.

Weitere bevorzugte Ausführungsformen ergeben sich aus den Unteransprüchen.

### Kurze Beschreibung der Zeichnung(en)

Im Nachfolgenden werden Ausführungsbeispiele der vorliegenden Erfindung unter Bezugnahme auf die beigefügten Zeichnungen näher beschrieben. Es zeigen:
- Fig. 1: in schematischer Darstellung eine aus dem Stand der Technik bekannte Auswertevorrichtung eines elektronischen Vorschaltgeräts;
- Fig. 2: in schematischer Darstellung eine Konstellation, bei der verschiedene Beleuchtungseinrichtungen über ein und denselben Bewegungsmelder geschaltet werden;
- Fig. 3: eine schematische Darstellung zur Erläuterung der Problematik durch Leitungskapazitäten bei einem erfindungsgemäßen elektronischen Vorschaltgerät;
- Fig. 4: eine schematische Darstellung zur Wirkungsweise eines kapazitiven Spannungsteilers bei einem erfindungsgemäßen elektronischen Vorschaltgerät;
- Fig. 5: in schematischer Darstellung den zeitlichen Verlauf des Signals auf der Phase L1 gegen Bezugspotential GND, des Nullleiters N gegen Bezugspotential GND sowie des Signals Uₐₛ am Ansteuereingang des Mikrocontrollers µC;
- Fig. 6: in schematischer Darstellung ein Ausführungsbeispiel eines erfindungsgemäßen elektronischen Vorschaltgeräts;
- Fig. 7: in schematischer Darstellung den zeitlichen Verlauf unterschiedlicher Netzphasen L1, L2, L3 in Relation zum zeitlichen Verlauf des Signals auf dem Nullleiter N; und
- Fig. 8: den zeitlichen Verlauf des Signals Uₐₛ für die Zeiträume L = ON und N = ON, wobei innerhalb L = ON die unterschiedlichen Verläufe dargestellt sind für SW = ON (Kurvenzug a), SW = OFF ohne kapazitiven Spannungsteiler (Kurvenzug b), sowie SW = OFF mit kapazitivem Spannungsteiler (Kurvenzug c) .

### Bevorzugte Ausführung der Erfindung

In den unterschiedlichen Figuren werden für gleiche und gleich wirkende Bauelemente dieselben Bezugszeichen verwendet. Diese werden der Übersichtlichkeit halber deshalb nur einmal eingeführt.

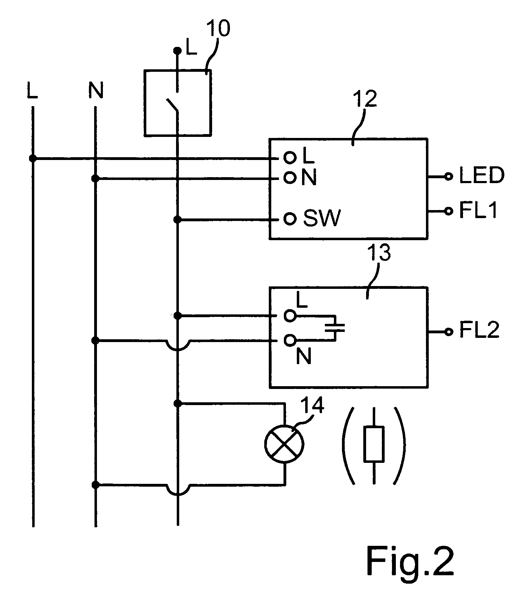

Fig. 2 zeigt in schematischer Darstellung eine Problematik, wie sie im Zusammenhang mit der vorliegenden Erfindung auftreten kann. Dabei werden mehrere Beleuchtungseinrichtungen über ein und denselben Bewegungsmelder 10 gesteuert. Beispielhaft ist ein erfindungsgemäßes elektronisches Vorschaltgerät 12 dargestellt, an dessen Ausgang eine LED und eine Entladungslampe FL1 gekoppelt sind. Am Ausgang eines zweiten elektronischen Vorschaltgeräts 13 ist eine zweite Entladungslampe FL2 gekoppelt. Schließlich ist eine Glühlampe 14 vorgesehen. Bei dem erfindungsgemäßen Vorschaltgerät ist das Vorschaltgerät einerseits mit einer Phase L einer dreiphasigen Wechselspannungsversorgung gekoppelt, überdies mit dem Nullleiter N der Wechselspannungsversorgung. Der Schaltausgang des Bewegungsmelders 10 ist mit einem Steuereingang SW des erfindungsgemäßen elektronischen Vorschaltgeräts 12 gekoppelt. Beim Vorschaltgerät 13 ist der Versorgungsanschluss L mit dem Schaltausgang des Bewegungsmelders 10 gekoppelt, während der Nullleiteranschluss N mit dem Nullleiter N gekoppelt ist. Die Glühlampe 14 schließlich ist zwischen den Schaltausgang des Bewegungsmelders 10 und den Nullleiter N gekoppelt.

Problematisch an dieser Konstellation ist, dass es in Phasen, in denen der Bewegungsmelder 10 nicht leitend geschaltet ist oder die Phase L bei leitend geschaltetem Bewegungsmelder "OFF" ist, zu einem unerwünschten Signal am Steuereingang SW eines erfindungsgemäßen Vorschaltgeräts 12 kommen kann und zwar infolge beispielsweise einer kapazitiven Kopplung zwischen dem L-Anschluss und dem N-Anschluss beim elektronischen Vorschaltgerät 13 oder schlicht dadurch, dass die Glühlampe 14 als ohmscher Widerstand wirkt und insofern ein Signal vom Nullleiter auf den Schaltausgang des Bewegungsmelders 10 überträgt.

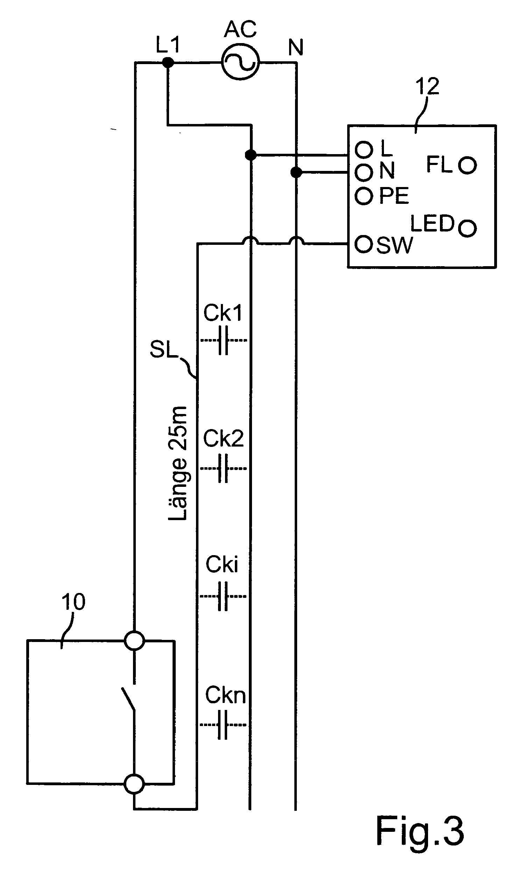

Fig. 3 zeigt, dass es bereits ohne die in Fig. 2 vorgestellte Konstellation zu Problemen des Signals am Steuereingang SW kommen kann und zwar infolge von abschnittsweisen Leitungskapazitäten Ck1, Ckn. Der Anschluss PE ist zum Koppeln mit Schutzerde vorgesehen. Leitungskapazitäten stellen Koppelkapazitäten dar zwischen einer Netzphase, vorliegend L1, zur Steuerleitung SL, die in diesem Beispiel 25 m beträgt. Der Kapazitätsbelag beträgt bei einem fünfadrigen NYM-Kabel mit einem Durchmesser von 1,5 mm² typischerweise 100 pF/m und maximal 120 pF/m. Die Leitungskapazität Ck ist die Summe der eingezeichneten abschnittsweisen Leitungskapazitäten Ck1 bis Ckn. Bei leitend geschaltetem Bewegungsmelder 10 wird die Leitungskapazität Ck kurzgeschlossen, so dass es zu keinerlei Problemen am Steuereingang SW eines erfindungsgemäßen elektronischen Vorschaltgeräts 12 kommt.

In Fig. 3 ist eine Wechselspannungsversorgung AC eingezeichnet, deren Nullleiter mit dem Anschluss N eines erfindungsgemäßen elektronischen Vorschaltgeräts gekoppelt ist und deren Phase L1 einerseits mit dem Anschluss L eines erfindungsgemäßen elektronischen Vorschaltgeräts und andererseits mit dem Bewegungsmelder 10 gekoppelt ist. Der Schaltausgang des Bewegungsmelders 10 ist mit dem Steuereingang SW eines erfindungsgemäßen elektronischen Vorschaltgeräts 12 gekoppelt. Problematisch sind demnach die Phasen, in denen der Bewegungsmelder 10 leitend geschaltet ist und die Phase L1 OFF ist beziehungsweise die Phasen, in denen der Bewegungsmelder 10 nicht leitend geschaltet ist.

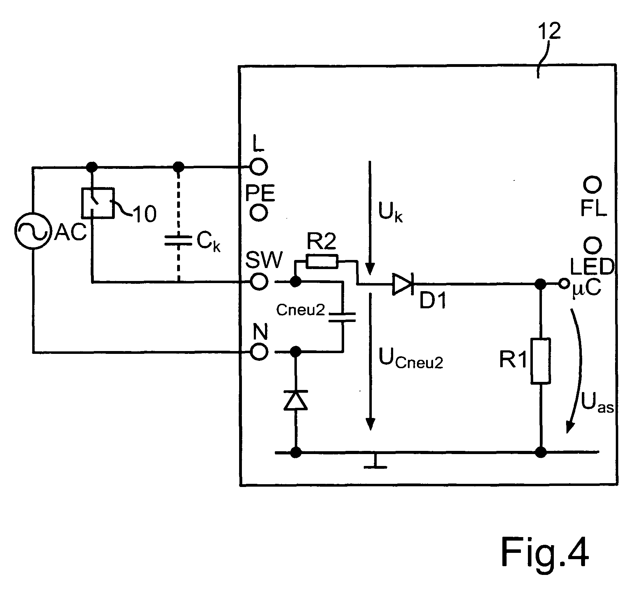

Fig. 4 zeigt eine andere Darstellung der Situation von Fig. 3, wobei aus der Fig. 4 überdies eine Maßnahme zur Reduktion der kapazitiven Störungen gemäß der vorliegenden Erfindung hervorgeht. Wie in der Fig. 3 ist eine Wechselspannungsversorgung AC vorgesehen, wovon eine Phase mit dem Anschluss L eines erfindungsgemäßen elektronischen Vorschaltgeräts gekoppelt ist. Der Nullleiter der Wechselstromversorgung AC ist mit dem Anschluss N eines erfindungsgemäßen elektronischen Vorschaltgeräts gekoppelt. Zwischen die mit dem Anschluss L gekoppelte Phase der Wechselstromversorgung AC und den Steuereingang SW ist wie in Fig. 4 der Bewegungsmelder 10 geschaltet, der sich auch hier zur Erläuterung der Grundgedanken der vorliegenden Erfindung in seinem nicht leitenden Zustand befindet. Demnach wirkt zwischen den Anschlüssen L und SW des erfindungsgemäßen elektronischen Vorschaltgeräts die Leitungskapazität Cₖ. Da diese eigentlich auf mehrere Abschnitte verteilt ist, ist sie in der Darstellung von Fig. 4 gestrichelt eingezeichnet.

Erfindungsgemäß ist zwischen den Anschluss SW und den Anschluss N eine Kapazität Cₙₑᵤ₂ gekoppelt, die zusammen mit der Leitungskapazität Cₖ einen kapazitiven Spannungsteiler bildet. Das Ziel besteht darin, durch geeignete Dimensionierung des Kondensators Cₙₑᵤ₂ die über dem Kondensator Cₙₑᵤ₂ abfallende Spannung U_{Cneu2} klein zu halten, wenn kein Steuersignal am Steuereingang SW anliegt, das heißt der Bewegungsmelder 10 nicht leitend geschaltet ist. Die über der Leitungskapazität Cₖ abfallende Spannung ist mit Uₖ bezeichnet. Bevorzugt wird die Kapazität Cₙₑᵤ₂ so gewählt, dass zwischen den Anschlüssen L und SW etwa die neunfache Spannung abfällt wie zwischen den Anschlüssen SW und N.

Wie aus der Darstellung ersichtlich, wird unter Verwendung eines ohmschen Spannungsteilers, der die Widerstände R2 und R1 umfasst, die über dem Widerstand R1 abfallende Spannung Uₐₛ an den Ansteuereingang des Mikroprozessors µC geführt. Die Diode D1 dient der Gleichrichtung.

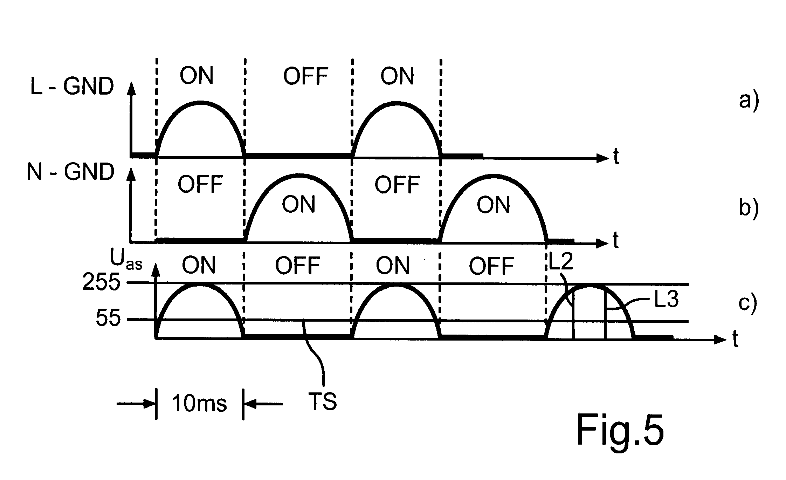

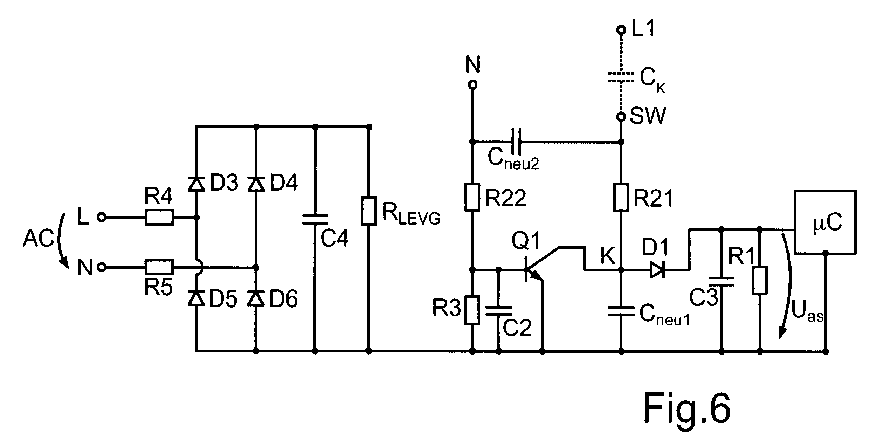

Bevor auf das in Fig. 6 dargestellte Ausführungsbeispiel eines erfindungsgemäßen elektronischen Vorschaltgeräts 12 näher eingegangen wird, soll zunächst auf Teile der Fig. 5 Bezug genommen werden, in der die zeitlichen Verläufe einiger für die vorliegende Erfindung bedeutsamer Spannungen schematisch dargestellt sind.

Kurvenzug a) zeigt zunächst den zeitlichen Verlauf der Spannung am Anschluss L, das heißt vorliegend der Phase L1, gegenüber Ground, wobei Ground das Bezugspotential des elektronischen Vorschaltgeräts 12 darstellt. Demnach besteht dieses Signal aus einer Folge von sinusförmigen Halbwellen, die jeweils von Phasen, die genau so lang dauern wie eine Halbwelle, mit einer Amplitude von Null unterbrochen werden. Kurvenzug b) zeigt den zeitlichen Verlauf der Spannung am Anschluss N gegenüber Ground. Wie der Darstellung entnommen werden kann, ist auch dieser Verlauf eine Abfolge von sinusförmigen Halbwellen, die von gleich langen Phasen mit der Amplitude Null unterbrochen werden. Vergleicht man das Signal gemäß Kurvenzug a) und das Signal gemäß Kurvenzug b), so stellt man fest, dass diese gegenphasig sind, das heißt dort wo Kurvenzug a) die Amplitude Null aufweist, hat Kurvenzug b) eine sinusförmige Halbwelle und umgekehrt.

Kurvenzug c) zeigt den zeitlichen Verlauf der Spannung Uₐₛ am Ansteuereingang des Mikroprozessors µC. Auf diesen Kurvenzug wird nach Diskussion des in Fig. 5 dargestellten Ausführungsbeispiels der vorliegenden Erfindung nochmals Bezug genommen.

Bei dem in Fig. 6 dargestellten Ausführungsbeispiel eines erfindungsgemäßen elektronischen Vorschaltgeräts 12 ist die Leitungskapazität Cₖ gestrichelt zwischen die beispielhaft gewählte Phase L1 und den Steuereingang SW eingezeichnet. Bei leitend geschaltetem Bewegungsmelder 10 entspricht der Verlauf des Signals am Steuereingang SW dem Kurvenzug a) von Fig. 5.

Wenn SW = ON ist, ist demnach N gleich OFF. Damit wird über dem ohmschen Widerstand R21 ein Signal an einen Kopplungspunkt K angelegt, der seinerseits über die Diode D1 und die Parallelschaltung des Widerstands R1 und einer Kapazität C3 mit dem Bezugspotential verbunden ist. Eine zwischen den Kopplungspunkt K und das Bezugspotential gekoppelte Kapazität Cₙₑᵤ₁ dient der Unterdrückung von Störungen infolge von Burst-Impulsen. Das Signal am Kopplungspunkt K wird demnach über die Diode D1 an den Ansteuereingang des Mikroprozessors µC angelegt.

Solange N gleich OFF ist, wird an die Basis des Transistors Q1 über den ohmschen Spannungsteiler R22, R3 kein Signal angelegt. Der Kondensator C2, der dem ohmschen Widerstand R3 parallel geschaltet ist, dient zur Filterung von Störungen. Demnach sperrt der Transistor Q1 in dieser Phase und beeinflusst das Potential am Kopplungspunkt K nicht.

In der Phase, in der SW gleich OFF ist, ist N gleich ON. Dadurch wird der Transistor Q1 leitend geschaltet, wodurch das Potential am Kopplungspunkt K auf Bezugspotential gezogen wird. Die Spannung Uₐₛ am Ansteuereingang des Mikroprozessors µC ist demnach Null.

Problematisch ist insbesondere die Phase, in der der Bewegungsmelder 10 nicht leitend geschaltet ist, wonach am Anschluss SW lediglich eine Spannung infolge der Leitungskapazität Cₖ anliegt. Wenn nun N gleich OFF ist, könnte dies zu einer unerwünschten Spannung Uₐₛ am Ansteuereingang des Mikroprozessors µC führen. Erfindungsgemäß ist deshalb vorgesehen, über einen Kondensator Cₙₑᵤ₂, der zwischen den Anschluss SW und den Anschluss N gekoppelt ist, die von der Leitungskapazität Cₖ verursachte Störspannung auf einen unkritischen Spannungspegel am Eingang SW zu verringern. Dadurch ist sichergestellt, dass bei dieser Konstellation die Spannung Uₐₛ am Steuereingang des Mikroprozessors µC einen vorgebbaren Schwellwert (TS) für eine Aktivierung der Leuchtstofflampe FL nicht unerwünscht überschreitet.

Die linke Hälfte der Fig. 6 zeigt, dass im Ausführungsbeispiel ein erfindungsgemäßes elektronisches Vorschaltgerät einen Anschluss L zur Kopplung mit einer Phase sowie einen Anschluss N zur Kopplung mit dem Nullleiter einer dreiphasigen Wechselspannungsversorgung aufweist. Den Anschlüssen L und N ist ein Gleichrichter nachgeschaltet, der die Dioden D3, D4, D5 und D6 umfasst. Mit dem Ausgang des Gleichrichters ist die Parallelschaltung eines Kondensators C4 sowie eines ohmschen Widerstands R_{LEVG} gekoppelt, wobei der ohmsche Widerstand R_{LEVG} die Last des elektronischen Vorschaltgeräts darstellt.

Der Kurvenzug c) von Fig. 5 zeigt den zeitlichen Verlauf der Spannung Uₐₛ am Ansteuereingang des Mikroprozessors µC bei leitend geschaltetem Bewegungsmelder 10. Es ist erkennbar, dass ein Signal Uₐₛ nur dann an den Mikroprozessoreingang µC gekoppelt wird, wenn N gleich OFF ist. Damit wird der im Zusammenhang mit Fig. 2 angesprochenen Problematik Rechnung getragen.

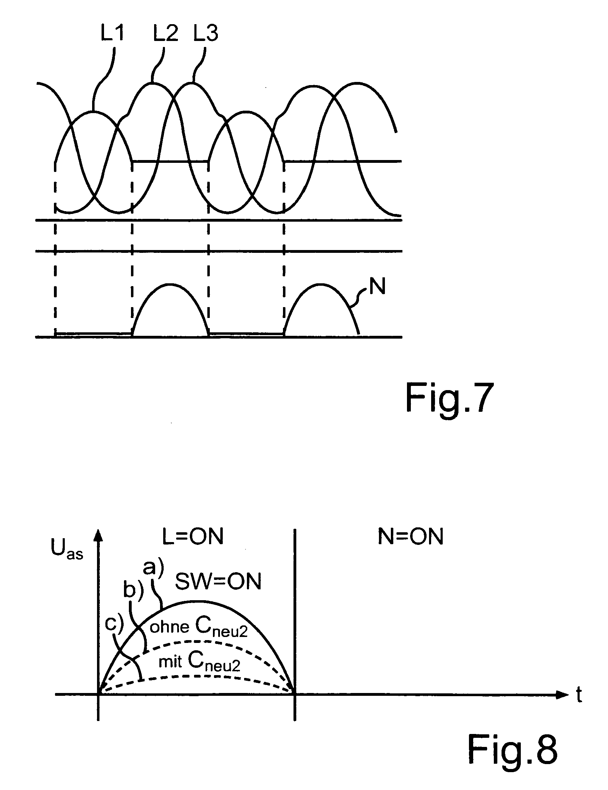

Fig. 7 zeigt den zeitlichen Verlauf unterschiedlicher Phasen L1, L2, L3 einer dreiphasigen Wechselstromversorgung AC bezogen auf den zeitlichen Verlauf des Signals am Nullleiter. Mit Bezug auf Kurvenzug c) von Fig. 5 wird durch den Mikroprozessor µC der Spitzenwert des Signals Uₐₛ ausgewertet. Geht man davon aus, dass der Maximalwert einer Halbwelle 255 Einheiten entsprechen würde, so kann im Mikroprozessor µC eine Schwelle TS vorgesehen sein, die beispielsweise bei 55 Einheiten liegt. Vorliegend wurde der Begriff "Einheiten" gewählt, da der tatsächliche Spannungswert unmaßgeblich ist; dieser kann, durch entsprechende Dimensionierung zum Beispiel der beteiligten Spannungsteiler nach Bedarf eingestellt werden. Amplituden über dieser Schwelle TS werden als "EIN", das heißt logisch "high", betrachtet, während Signale unterhalb dieser Schwelle TS als "AUS", das heißt logisch "low", betrachtet werden. Die Darstellung in der rechten Halbwelle des Kurvenzugs c) lässt erkennen, dass selbst dann, wenn nicht die Phase L1 mit dem Bewegungsmelder 10 gekoppelt ist, eine zuverlässige Auswertung ermöglicht wird. Auch bei Verwendung der Phasen L2 oder L3 ergeben sich bei Auswertung des Spitzenwerts Amplituden über der vorgebbaren Schwelle TS, so dass zuverlässig ein logisch "high" von einem logisch "low" unterschieden werden kann.

In einem bevorzugten Ausführungsbeispiel misst der Mikrocontroller µC die Amplitude des Signals Uₐₛ an seinem Ansteuereingang alle 400 µs. Bei der bevorzugt gewählten, oben erwähnten Schwelle TS lässt sich ein erfindungsgemä-βes elektronisches Vorschaltgerät 12 einsetzen für Netzspannungen mit einer maximalen Amplitude zwischen 140 und 400°V.

Fig. 8 schließlich zeigt eine schematische Darstellung der Spannung Uₐₛ am Ansteuereingang des Mikroprozessors µC für die Fälle SW = ON (Kurvenzug a), SW = OFF und ohne die Kapazität Cₙₑᵤ₂ (Kurvenzug b), sowie SW = OFF mit der Kapazität Cₙₑᵤ₂ (Kurvenzug c). Deutlich lässt sich erkennen, dass der Beitrag der Leitungskapazität unter Verwendung eines kapazitiven Spannungsteilers signifikant abgesenkt werden konnte.

Durch die Maßnahmen der vorliegenden Erfindung lässt sich die Länge der Steuerleitung im Wesentlichen verfünffachen. Anwendungen, die bisher nur mit Steuerleitungen bis 5 m funktioniert haben, können nunmehr mit Steuerleitungen bis 25 m erfolgreich realisiert werden.

## Patentansprüche

1. Elektronisches Vorschaltgerät zum Betreiben mindestens einer LED und/oder mindestens einer Entladungslampe (FL) mit:
- einem ersten Anschluss (L) zum Koppeln mit einer Phase (L1, L2, L3) einer Wechselspannungsversorgung (AC) ;
- einem zweiten Anschluss (N) zum Koppeln mit dem Nullleiter der Wechselspannungsversorgung (AC);
- einem Steuereingang (SW) zum Einkoppeln eines Steuersignals einer Steuervorrichtung (10), die ihrerseits mit einer Phase (L1, L2, L3) der Wechselspannungsversorgung (AC) gekoppelt ist;
- einem ersten Ausgang zum Koppeln mit der mindestens einen LED;
- einem zweiten Ausgang zum Koppeln mit der mindestens einen Entladungslampe (FL);
- einer ersten Treiberschaltung für die mindestens eine LED;
- einer zweiten Treiberschaltung für die mindestens eine Entladungslampe (FL);
- einer Auswertevorrichtung zum Auswerten des Steuersignals am Steuereingang (SW), wobei die Auswertevorrichtung einen Mikrocontroller (µC) umfasst, der mit der ersten und der zweiten Treiberschaltung gekoppelt ist, um diese in Abhängigkeit des Steuersignals zu aktivieren, wobei der Mikrocontroller (µC) einen Ansteuereingang aufweist, der mit dem Steuereingang (SW) koppelbar ist;
**dadurch gekennzeichnet,**
**dass** zwischen den zweiten Anschluss (N) und den Steuereingang (SW) eine erste Kapazität (Cₙₑᵤ₂) gekoppelt ist.

2. Elektronisches Vorschaltgerät nach Anspruch 1,
**dadurch gekennzeichnet,**
**dass** die Auswertevorrichtung weiterhin eine Ausblendvorrichtung umfasst, die zwischen den Steuereingang (SW) und den Ansteuereingang des Mikrocontrollers (µC) gekoppelt ist, wobei die Ausblendvorrichtung ausgelegt ist, das Steuersignal nur während der Zeiträume an den Ansteuereingang des Mikrocontrollers (µC) zu koppeln, während der das Signal am zweiten Anschluss (N) Null ist.

3. Elektronisches Vorschaltgerät nach Anspruch 2,
**dadurch gekennzeichnet,**
**dass** die Ausblendvorrichtung einen elektronischen Schalter (Q1) mit einer Steuerelektrode, einer Bezugselektrode und einer Arbeitselektrode umfasst, wobei die Steuerelektrode mit dem zweiten Anschluss (N) gekoppelt ist, wobei die Bezugselektrode mit einem Bezugspotential gekoppelt ist, wobei die Arbeitselektrode mit einem Kopplungspunkt (K) gekoppelt ist, der mit dem Ansteuereingang des Mikrocontrollers (µC) einerseits und dem Steuereingang (SW) andererseits gekoppelt ist.

4. Elektronisches Vorschaltgerät nach einem der vorhergehenden Ansprüchen,
**dadurch gekennzeichnet,**
**dass** eine zweite Kapazität (Cₙₑᵤ₁) zwischen den Kopplungspunkt (K) und das Bezugspotential gekoppelt ist.

5. Elektronisches Vorschaltgerät nach einem der Ansprüche 3 oder 4,
**dadurch gekennzeichnet,**
**dass** zwischen den Steuereingang (SW) und den Kopplungspunkt (K) ein erster ohmscher Widerstand (R21) und zwischen den Ansteuereingang des Mikrocontrollers (µC) und das Bezugspotential ein zweiter ohmscher Widerstand (R1) gekoppelt ist.

6. Elektronisches Vorschaltgerät nach Anspruch 5,
**dadurch gekennzeichnet,**
**dass** zwischen den Kopplungspunkt (K) und den Ansteuereingang des Mikrocontrollers (µC) eine Diode (D1) gekoppelt ist.

7. Elektronisches Vorschaltgerät nach einem der vorhergehenden Ansprüche,
**dadurch gekennzeichnet,**
**dass** der Mikrocontroller (µC) ausgelegt ist, den Spitzenwert des Signals (Uₐₛ) an seinem Ansteuereingang auszuwerten.

8. Elektronisches Vorschaltgerät nach Anspruch 7,
**dadurch gekennzeichnet,**
**dass** im Mikrocontroller (µC) ein vorgebbarer Schwellwert (TS) abgelegt ist, wobei der Mikrocontroller (µC) ausgelegt ist, ein Signal an seinem Ansteuereingang als "high" einzustufen, wenn der Spitzenwert des Ansteuersignals über dem vorgebbaren Schwellwert (TS) liegt, und als "low", wenn der Spitzenwert des Ansteuersignals unter dem vorgebbaren Schwellwert (TS) liegt.

9. Elektronisches Vorschaltgerät nach Anspruch 8,
**dadurch gekennzeichnet,**
**dass** der im Mikrocontroller (µC) abgelegte vorgebbare Schwellwert (TS) bezogen auf den Spitzenwert des Signals (Uₐₛ) am Steuereingang (SW) zwischen 15 und 25% dieses Spitzenwerts, insbesondere zwischen 18 und 23%, beträgt.

10. Elektronisches Vorschaltgerät nach einem der vorhergehenden Ansprüche,
**dadurch gekennzeichnet,**
**dass** das elektronische Vorschaltgerät weiterhin einen Gleichrichter (D3, D4, D5, D6) umfasst, dessen Eingang einen ersten und einen zweiten Eingangsanschluss aufweist, wobei der erste Eingangsanschluss mit dem zweiten Anschluss (N) gekoppelt ist, wobei der zweite Eingangsanschluss mit der ersten (L1) oder der zweiten (L2) oder der dritten Phase (L3) einer dreiphasigen Wechselspannungsversorgung (AC) gekoppelt ist, wobei das niedrig liegende Potential am Ausgang des Gleichrichters (D3, D4, D5, D6) das Bezugspotential des elektronischen Vorschaltgeräts darstellt.

11. Elektronisches Vorschaltgerät nach einem der vorhergehenden Ansprüche,
**dadurch gekennzeichnet,**
**dass** die Eingangsimpedanz des Steuereingangs (SW) zwischen 700 kOhm und 2 MOhm, insbesondere 1 MOhm, beträgt.

12. Elektronisches Vorschaltgerät nach einem der vorhergehenden Ansprüche,
**dadurch gekennzeichnet,**
**dass** die Steuervorrichtung einen Bewegungsmelder (10) darstellt.

## Claims

1. Electronic control gear for operating at least one LED and/or at least one discharge lamp (FL) comprising:
- a first terminal (L) for coupling to a phase (L1, L2, L3) of an AC voltage supply (AC);
- a second terminal (N) for coupling to the neutral conductor of the AC voltage supply (AC);
- a control input (SW) for coupling in a control signal of a control apparatus (10), which for its part is coupled to a phase (L1, L2, L3) of the AC voltage supply (AC);
- a first output for coupling to the at least one LED;
- a second output for coupling to the at least one discharge lamp (FL);
- a first driver circuit for the at least one LED;
- a second driver circuit for the at least one discharge lamp (FL);
- an evaluation apparatus for evaluating the control signal at the control input (SW), the evaluation apparatus comprising a microcontroller (µC), which is coupled to the first and the second driver circuit in order to activate said driver circuits depending on the control signal, the microcontroller (µC) having a drive input which can be coupled to the control input (SW);
**characterized**
**in that** a first capacitance (C_{new2}) is coupled between the second terminal (N) and the control input (SW).

2. Electronic control gear according to Claim 1,
**characterized**
**in that** the evaluation apparatus furthermore comprises a suppression apparatus, which is coupled between the control input (SW) and the drive input of the microcontroller (µC), the suppression apparatus being designed to couple the control signal to the drive input of the microcontroller (µC) only during the time periods during which the signal at the second terminal (N) is zero.

3. Electronic control gear according to Claim 2,
**characterized**
**in that** the suppression apparatus comprises an electronic switch (Q1) with a control electrode, a reference electrode and a working electrode, the control electrode being coupled to the second terminal (N), the reference electrode being coupled to a reference potential, the working electrode being coupled to a coupling point (K), which is coupled on one side to the drive input of the microcontroller (µC) and on the other side to the control input (SW).

4. Electronic control gear according to one of the preceding claims,
**characterized**
**in that** a second capacitance (C_{new1}) is coupled between the coupling point (K) and the reference potential.

5. Electronic control gear according to either of Claims 3 and 4,
**characterized**
**in that** a first ohmic resistor (R21) is coupled between the control input (SW) and the coupling point (K), and a second ohmic resistor (R1) is coupled between the drive input of the microcontroller (µC) and the reference potential.

6. Electronic control gear according to Claim 5,
**characterized**
**in that** a diode (D1) is coupled between the coupling point (K) and the drive input of the microcontroller (µC).

7. Electronic control gear according to one of the preceding claims,
**characterized**
**in that** the microcontroller (µC) is designed to evaluate the peak value of the signal (Uₐₛ) at its drive input.

8. Electronic control gear according to Claim 7,
**characterized**
**in that** a predeterminable threshold value (TS) is stored in the microcontroller (µC), the microcontroller (µC) being designed to categorize a signal at its drive input as "high" when the peak value of the drive signal is above the predeterminable threshold value (TS) and as "low" when the peak value of the drive signal is below the predeterminable threshold value (TS).

9. Electronic control gear according to Claim 8,
**characterized**
**in that** the predeterminable threshold value (TS) stored in the microcontroller (µC), in relation to the peak value of the signal (Uₐₛ) at the control input (SW), is between 15 and 25% of this peak value, in particular between 18 and 23%.

10. Electronic control gear according to one of the preceding claims,
**characterized**
**in that** the electronic control gear furthermore comprises a rectifier (D3, D4, D5, D6), whose input has a first input terminal and a second input terminal, the first input terminal being coupled to the second terminal (N), the second input terminal being coupled to the first phase (L1) or the second phase (L2) or the third phase (L3) of a three-phase AC voltage supply (AC), the low potential at the output of the rectifier (D3, D4, D5, D6) representing the reference potential of the electronic control gear.

11. Electronic control gear according to one of the preceding claims,
**characterized**
**in that** the input impedance of the control input (SW) is between 700 kohms and 2 Mohms, in particular 1 Mohm.

12. Electronic control gear according to one of the preceding claims,
**characterized**
**in that** the control apparatus represents a motion sensor (10).

## Revendications

1. Ballast électronique destiné à faire fonctionner au moins une LED et/au moins une lampe à décharge (FL) comprenant :
- une première borne (L) à coupler avec une phase (L1, L2, L3) d'une alimentation en tension alternative (AC) ;
- une deuxième borne (N) à coupler avec le conducteur neutre de l'alimentation en tension alternative (AC) ;
- une entrée de commande (SW) destinée au couplage d'un signal de commande d'un dispositif de commande (10) qui est couplé de son côté avec une phase (L1, L2, L3) de l'alimentation en tension alternative (AC) ;
- une première sortie à coupler avec l'au moins une LED ;
- une deuxième sortie à coupler avec l'au moins une lampe à décharge (FL) ;
- un premier circuit d'attaque pour l'au moins une LED ;
- un deuxième circuit d'attaque pour l'au moins une lampe à décharge (FL) ;
- un dispositif d'exploitation destiné à l'exploitation du signal de commande au niveau de l'entrée de commande (SW), dans lequel le dispositif d'exploitation comprend un microcontrôleur (µC) qui est couplé avec le premier et le deuxième circuit d'attaque afin de les activer en fonction du signal de commande, dans lequel le microcontrôleur (µC) présente une entrée d'amorçage qui peut être couplée avec l'entrée de commande (SW) ;
**caractérisé en ce**
**qu'**entre la deuxième borne (N) et l'entrée de commande (SW) est couplé un premier condensateur (Cₙₑᵤ₂).

2. Ballast électronique selon la revendication 1,
**caractérisé en ce**
**que** le dispositif d'exploitation comprend en outre un dispositif de suppression qui est couplé entre l'entrée de commande (SW) et l'entrée d'amorçage du microcontrôleur (µC), dans lequel le dispositif de suppression est conçu pour ne coupler le signal de commande à l'entrée d'amorçage du microcontrôleur (µC) qu'aux moments pendant lesquels le signal au niveau de la deuxième borne (N) est égal à zéro.

3. Ballast électronique selon la revendication 2,
**caractérisé en ce**
**que** le dispositif de suppression comprend un commutateur électronique (Q1) avec une électrode de commande, une électrode de référence et une électrode de travail, dans lequel l'électrode de commande est couplée avec la deuxième borne (N), dans lequel l'électrode de référence est couplée avec un potentiel de référence, dans lequel l'électrode de travail est couplée avec un point de couplage (K), qui est d'une part couplé avec l'entrée d'amorçage du microcontrôleur (µC) et d'autre part avec l'entrée de commande (SW).

4. Ballast électronique selon l'une des revendications précédentes,
**caractérisé en ce**
**qu'**un deuxième condensateur (Cₙₑᵤ₁) est couplé entre le point de couplage (K) et le potentiel de référence.

5. Ballast électronique selon l'une des revendications 3 ou 4,
**caractérisé en ce**
**qu'**entre l'entrée de commande (SW) et le point de couplage (K) est couplée une première résistance ohmique (R21) et entre l'entrée d'amorçage du microcontrôleur (µC) et le potentiel de référence est couplée une deuxième résistance ohmique (R1).

6. Ballast électronique selon la revendication 5,
**caractérisé en ce**
**qu'**entre le point de couplage (K) et l'entrée d'amorçage du microcontrôleur (µC) est couplée une diode (D1).

7. Ballast électronique selon l'une des revendications précédentes,
**caractérisé en ce**
**que** le microcontrôleur (µC) est conçu pour exploiter la valeur de crête du signal (Uₐₛ) au niveau de son entrée d'amorçage.

8. Ballast électronique selon la revendication 7,
**caractérisé en ce**
**que** dans le microcontrôleur (µC) une valeur seuil prédéfinissable (TS) est entrée en mémoire, dans lequel le microcontrôleur (µC) est conçu pour hiérarchiser un signal au niveau de son entrée d'amorçage comme « high » si la valeur de crête du signal d'amorçage se situe au-dessus de la valeur seuil prédéfinissable (TS), et comme « low » si la valeur de crête du signal d'amorçage se situe en dessous de la valeur seuil prédéfinissable (TS).

9. Ballast électronique selon la revendication 8,
**caractérisé en ce**
**que** la valeur seuil prédéfinissable (TS) entrée en mémoire dans le microcontrôleur (µC) par rapport à la valeur de crête du signal (Uₐₛ) au niveau de l'entrée de commande (SW) représente entre 15 et 25 % de cette valeur de crête, en particulier entre 18 et 23 %.

10. Ballast électronique selon l'une des revendications précédentes,
**caractérisé en ce**
**que** le ballast électronique comprend en outre un redresseur (D3, D4, D5, D6), dont l'entrée présente une première et une deuxième borne d'entrée, dans lequel la première borne d'entrée est couplée avec la deuxième borne (N), dans lequel la deuxième borne d'entrée est couplée avec la première (L1) ou la deuxième (L2) ou la troisième phase (L3) d'une alimentation en tension alternative (AC) triphasée, dans lequel le potentiel extrêmement faible au niveau de la sortie du redresseur (D3, D4, D5, D6) représente le potentiel de référence du ballast électronique.

11. Ballast électronique selon l'une des revendications précédentes,
**caractérisé en ce**
**que** l'impédance d'entrée de l'entrée de commande (SW) se situe entre 700 kΩ et 2 MΩ, en particulier 1 MΩ.

12. Ballast électronique selon l'une des revendications précédentes,
**caractérisé en ce**
**que** le dispositif de commande représente un détecteur de mouvements (10).
